# EUROPEAN PATENT APPLICATION

(11) **EP 1 613 099 A1**
(43) Date of publication of application: **04.01.2006**
(21) Application number: 04015314.0
(22) Date of filing: 30.06.2004
(51) Int. Cl.: H04N 9/31

(54) **Rear projection television set**

(71) Applicant: DEUTSCHE THOMSON-BRANDT GMBH, 78048 Villingen-Schwenningen (DE)
(72) Inventor: Chauvin, Jacques, 78087 Mönchweller (DE); Runtze, Albert, 78052 VS Villingen (DE); Louvel, Jean-Paul, 78086 Brigachtal (DE)
(74) Representative: Arnold, Klaus-Peter

(57) **Abstract**

The purpose of this invention is to simplify the power circuit in providing the convergence correction for the 3 colors by digital non-linear image mapping circuit at video signal level, (no power dissipation) and to provide the vertical trapezium correction with magnets on the yokes (no power dissipation) and advantageously the common North-South correction with a single power amplifier for the three color tubes.

## Description

### Background

The present invention relates to a rear projection television set comprising three CRT (cathode ray tube) picture tubes, as describe in the preamble of the claim 1.

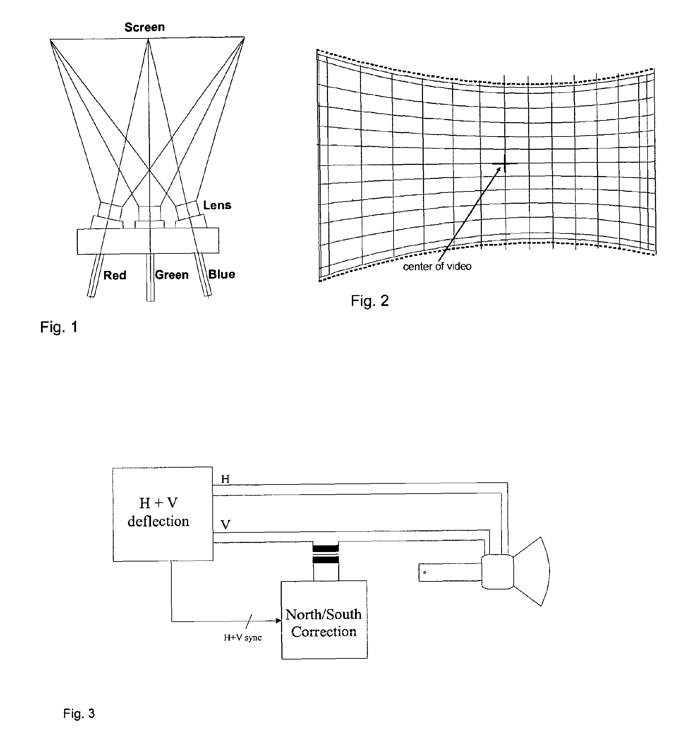

The principle of a CRT based projection television set is to superimpose on a screen the pictures of three picture tubes for the colors red, green, and blue, projected through three lenses onto a display screen to construct a color picture, as shown in Fig 1. The projected red, green and blue pictures have geometric distortions and and need respective correction circuits.

A convergence circuit corrects distortions in creating a correction at the tube level. An auxiliary deflection yoke on each tube, not shown in Fig. 1, controlled by horizontal and vertical correction currents usually does the remaining correction. Six power amplifiers are needed, driven by a digital convergence circuit, two for a vertical and a horizontal correction for each of the three tubes. The geometry and convergence correction values are stored in a non-volatile memory. The largest distortion is due to the fact that the optical axis of the 3 tubes are not perpendicular to the screen but only the green tube, which is arranged in the centre between the red an the blue tube. Therefore, as can be seen in Fig. 1, the red and the blue pictures are projected with an angle of some degrees that create trapezium and linearity distortions.

### Invention

The purpose of this invention is to simplify the power circuit in providing the convergence correction for the three colors by digital non-linear image mapping circuit at video signal level, (no power dissipation) and to provide the vertical trapezium correction with magnets on the yokes (no power dissipation) and advantageously the common North-South correction with a single power amplifier for the three color tubes.

Therefore, the six power amplifiers and the respective power supply, as described for example in EP-A-0 766 377, are no more required, resulting a essential cost saving and weight reduction. Only additional current less, fixed magnets are used for a pre-correction. The non-linear image mapping can be included with only little effort into already existing digital signal processing circuits. If the non-linear image mapping would be used also for the vertical geometry correction, it would have in consequence a degradation of the vertical resolution, showing visible artefacts. The advantages of the invention are therefore a cost saving and simplification of the hardware.

### Drawings

Exemplary embodiments of the invention are illustrated in the drawings and are explained in more detail in the following description.

In the figures:
- Fig. 1: Classical PTV tube positions, according to prior art,
- Fig. 2: Projected blue picture without pre-correction
- Fig. 3: North/South pincushion correction with a coupling transformer,
- Fig. 4: Power amplifier with boosters
- Fig. 5: North/South pincushion correction with additional deflection coil,
- Fig. 6: non-linear image mapping arrangement for convergence correction with a separate circuit, and
- Fig. 7: non-linear image mapping arrangement for convergence correction with an integrated solution.

### Detailed description of the invention

### Implementation of geometry pre-correction

Symmetrical vertical trapezium distortion of the external red and blue tubes is done with permanent magnets, arranged on the each of the yokes of the blue and red picture tubes. This process does not deteriorate the spot size. The yokes with magnet can be specifically designed for each display size, i.e. 40", 52" etc, to minimize tolerances.

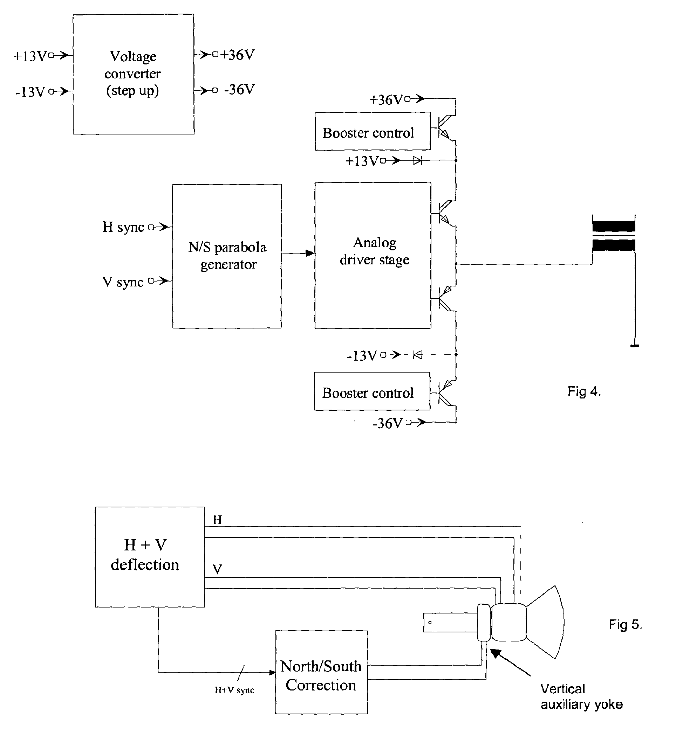

An East-West pincushion correction, illustrated in Fig. 2, is provided by the main deflection circuit, which is shown in Fig. 3. Fig 2. shows an example of a real distortion with East-West pincushion correction.

### Implementation of North-South pincushion pre-correction

A second cause of distortion is the pincushion effect. It is usually worse in projection TV than for direct view CRT TV due to the shape of the phosphor surface, which is generally concave for optical reasons.

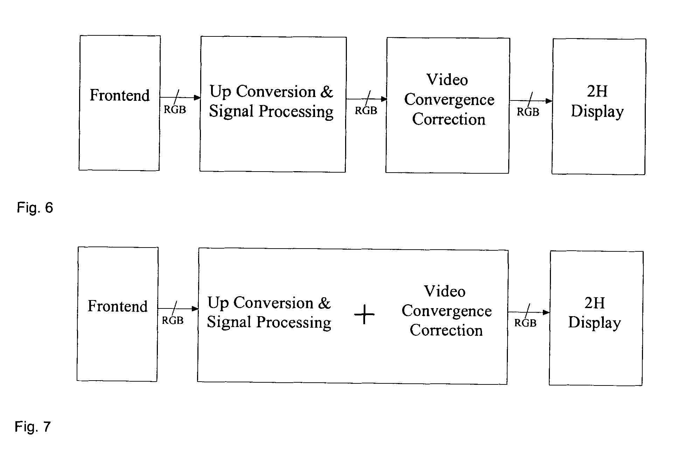

The North-South pincushion can be corrected for example with the following variants:
1. A North/South correction is used to correct the N/S error, shown in Fig. 3. It generates a correction current that is added to the vertical deflection current via a transformer.
   Variant to save power in the N/S amplifier: Step-up converters, which generate output voltages that are modulated to the voltage needs of the power stage at frame rate, as shown in Fig. 4. This circuit provides a north/south (N/S) correction in accordance with Fig. 3.
2. Variant of N/S pincushion correction:
   With an auxiliary convergence vertical yoke coil placed on each of the picture tubes, as shown in Fig. 5. This has much less losses as compared to the injection into the vertical deflection, as shown in fig. 3. The coils on the three tubes are connected in parallel.
3. Variant of N/S pincushion correction:
   The vertical deflection yoke design is changed to provide some percentage of the needed N/S correction. Just enough not to disturb the spot size. This will save some power in the N/S correction power stage.

### Implementation of convergence correction with non-linear image mapping

Horizontal linearity distortion can be corrected easily with digital non-linear image mapping.The RGB non-linear image mapping could be integrated in the video up-converter or a specific IC, with digital correction parameters stored in a non-volatile memory (NVM), included in the chain of the digital video signal circuits.
1. The figure 6 shows the video chain with the video convergence circuit inserted between the signal processing and the display part. This is like an add-on for existing concepts.
2. Implementation variant where the video convergence is fully integrated in the signal processing, as shown in Fig. 7. This could be used in concepts with enough processing power. The advantage is to use frame memories and converter chips as a common resource.

## Claims

1. Rear projection television set comprising three CRT picture tubes for the colors red, green and blue for displaying a color picture on a screen, **characterized in that**
the rear projection television set comprises further magnets only for the CRT picture tubes red and blue for a geometrical pre-correction, and comprises a digital signal processing circuit for providing a convergence correction by use of non-linear image mapping.

2. Rear projection television set according to claim 1, **characterized in that** the vertical trapezium correction is made with permanent magnets, arranged on the yokes of the CRT picture tubes red and blue for said geometrical pre-correction.

3. Rear projection television set according to claim 1 or 2, **characterized in that** the magnets have a specific design according to the size of the picture display.

4. Rear projection television set according to claim 1, 2, or 3, **characterized in that** the digital signal processing circuit for the non-linear image mapping provides only a correction of horizontal linearity distortion.

5. Rear projection television set according to one of the preceding claims, **characterized in that** a north/south correction is made by a magnet coil arranged on each of the picture red, green, and blue, each coil being powered by a single power amplifier.

6. Rear projection television set according to one of the preceding claims, **characterized in that** a North/South pincushion correction is performed by using a correction circuit, which provides a current being coupled and added to the vertical deflection current.

7. Rear projection television set according to one of the preceding claims 1 to 5, **characterized in that** the rear projection television set comprises a correction circuit for a North/South pincushion correction, which provides a current for a vertical auxiliary yoke arranged on each color picture tubes.

8. Rear projection television set according to one of the preceding claims, **characterized in that** the television set comprises a non-volatile memory, in which digital correction parameters are stored for providing non-linear image mapping for video convergence correction after an up-conversion of the RGB signals.

9. Rear projection television set in accordance with claim 8, **characterized in that** in the non-volatile memory data are stored corresponding to geometric areas of the display for providing convergence correction.

10. Rear projection television set according to one of the preceding claims, **characterized in that** An East-West pincushion correction is provided by the main deflection circuit (Fig. 3).
